# DEMANDE DE BREVET EUROPEEN

(11) **EP 1 557 344 A1**
(43) Date de publication de la demande: **27.07.2005**
(21) Numéro de dépôt: 05300011.3
(22) Date de dépôt: 07.01.2005
(51) Int. Cl.: B62D 43/10

(54) **Dispositif de manipulation d'une roue de secours de véhicule automobile**

(30) Priorité: 23.01.2004 FR 0400633
(71) Demandeur: Peugeot Citroen Automobiles S.A., 78140 Vélizy Villacoublay (FR)
(72) Inventeur: LEON, Franck, 92500, RUEIL-MALMAISON (FR); PEZERIL, Stéphane, 92310, SEVRES (FR)
(74) Mandataire: Fernandez, Francis Lionel

(57) **Abrégé**

Dispositif de manipulation d'une roue de secours (1) destinée à être placée dans un logement (2) ménagé dans le plancher (15) d'un coffre (14) de véhicule automobile, caractérisé en ce qu'il comprend un plateau (13) placé à l'intérieur dudit logement (2) et destiné à supporter ladite roue (1), ledit plateau (13) coopérant avec des moyens élastiques de rappel pour basculer entre une position basse où la roue (1) est alors dans son logement (2) et une position haute en saillie au-dessus dudit plancher d'une hauteur prédéterminée d'où la roue peut être facilement extraite hors du coffre (14).

## Description

La présente invention concerne un dispositif de manipulation d'une roue de secours de véhicule automobile.

Les véhicules automobiles comportent classiquement au moins une roue de secours destinée à suppléer en cas de crevaison de l'une des roues équipant le véhicule.

Il est donc nécessaire de prévoir un logement approprié pour stocker sur un véhicule automobile ladite roue de secours. On connaît déjà dans l'état de la technique un logement monté basculant sur le corps du véhicule entre une position de rangement de la roue de secours et une position d'accès au logement.

Généralement le logement est monté basculant sous le plancher du véhicule, entre la position de rangement, dans laquelle il est sensiblement horizontal et la position d'accès, dans laquelle il est incliné vers le bas pour permettre le retrait de la roue du logement ou la mise en place de cette roue dans le logement.

Cet agencement a pour inconvénient que la roue de secours est disposée à l'extérieur du véhicule, en étant soumise aux intempéries et aux risques de vol.

Pour remédier à cet inconvénient, il a été proposé de placer la roue de secours dans un logement aménagé à l'intérieur d'un coffre du véhicule.

Cependant, cet agencement a pour inconvénient d'exiger de l'utilisateur de fournir un effort relativement important pour soulever la roue de secours afin de l'extraire de son logement ou de la mettre en place dans celui-ci.

L'invention a pour but de proposer un agencement d'un réceptacle pour roue de secours qui, à la fois, protège la roue contre les intempéries et les risques de vol et minimise les efforts de manipulation de la roue.

A cet effet, l'invention a pour objet un dispositif de manipulation d'une roue de secours destinée à être placée dans un logement ménagé dans le plancher d'un coffre de véhicule automobile.

Selon l'invention ce dispositif est caractérisé en ce qu'il comprend des moyens de support tel qu'un plateau, placés à l'intérieur du logement de roue de secours et destinés à supporter la roue, ces moyens de support coopérant avec des moyens élastiques de rappel pour basculer entre une position basse où la roue est alors dans son logement et une position haute en saillie au-dessus dudit plancher d'une hauteur prédéterminée à partir de laquelle la roue peut être facilement extraite hors du coffre.

Selon une autre caractéristique du dispositif de manipulation d'une roue de secours objet de l'invention, le coffre comporte une ouverture d'accès délimitée par un seuil de coffre surélevé par rapport au plancher de sorte que lorsque le plateau est en position haute, ladite roue affleure sensiblement le seuil du coffre.

Selon une autre caractéristique du dispositif de manipulation d'une roue de secours objet de l'invention, le coffre comporte une ouverture d'accès délimitée par un seuil de coffre surélevé par rapport au plancher et le plateau est monté à pivotement au voisinage d'un bord s'étendant à l'opposé du seuil.

Selon une autre caractéristique du dispositif de manipulation d'une roue de secours objet de l'invention, lesdits moyens élastiques sont formés par une lame élastique.

Selon une autre caractéristique du dispositif de manipulation d'une roue de secours objet de l'invention, la lame formant ressort s'étend parallèlement au plan longitudinal médian du véhicule.

Selon une autre caractéristique du dispositif de manipulation d'une roue de secours objet de l'invention, le coffre comporte une ouverture d'accès délimitée par un seuil de coffre surélevé par rapport au plancher, et une première zone de la lame formant ressort est solidarisée avec le fond du logement de roue de secours dans la zone de ce logement opposée au seuil, une seconde zone de la lame formant ressort coopérant alors avec le plateau.

Selon une autre caractéristique du dispositif de manipulation d'une roue de secours objet de l'invention, la première zone de la lame ressort solidaire du fond du logement est formée par une partie recourbée sensiblement cylindrique ménagée à une extrémité de la lame, cette partie recourbée définissant une articulation pour le déplacement de ladite lame et du plateau coopérant avec cette dernière.

Selon une autre caractéristique du dispositif de manipulation d'une roue de secours objet de l'invention, le logement de roue de secours comprend des moyens d'appui du plateau et de la lame lorsque le plateau se trouve en position basse.

Selon une autre caractéristique du dispositif de manipulation d'une roue de secours objet de l'invention, ces moyens d'appui comportent des moyens amortisseurs.

Selon une autre caractéristique du dispositif de manipulation d'une roue de secours objet de l'invention, les moyens élastiques sont tarés de façon à ce que la position basse du plateau supportant la roue corresponde sensiblement à une position d'équilibre.

D'autres avantages et caractéristiques de l'invention apparaîtront à la lecture de la description qui va suivre, donnée uniquement à titre d'exemple, pour la compréhension de laquelle on se réfèrera aux dessins annexés dans lesquels :
- la figure 1 est une vue en coupe longitudinale selon l'axe longitudinal du véhicule d'un dispositif de manipulation d'une roue de secours selon l'invention ;
- la figure 2 est une vue de détail du dispositif représenté à la figure 1.

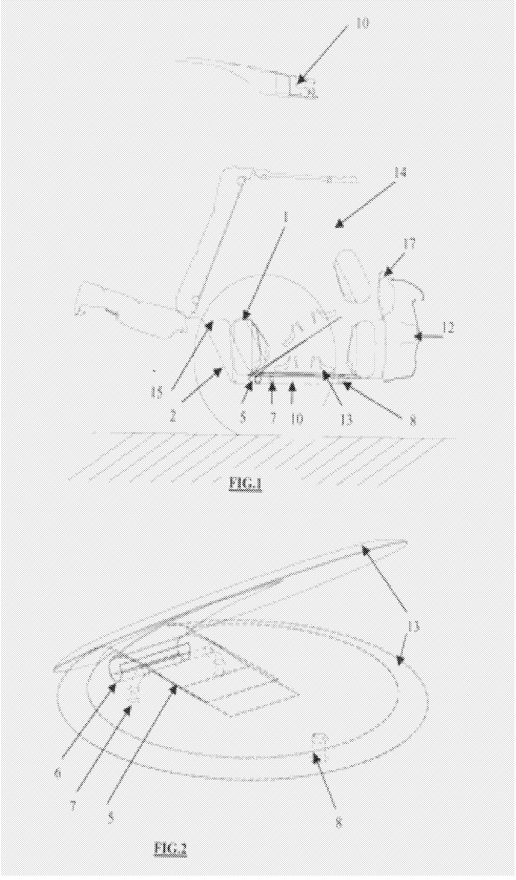

On a représenté sur la figure 1 la partie arrière d'un véhicule automobile 10 dans lequel est agencé un coffre 14. Ce coffre comporte une ouverture d'accès 16 que vient fermer un ouvrant adapté, tel qu'un hayon, non figuré. Cette ouverture d'accès est délimitée dans sa partie inférieure par un seuil de coffre 17 surélevé par rapport au plancher 15 du coffre. Ce seuil se trouve disposé sensiblement derrière le par-chocs arrière 12.

Le plancher 15 du coffre comprend un logement 2 ménagé derrière le seuil du coffre 17. Le logement 2 est destiné à loger une roue de secours 1. Le logement 2 est dimensionné de façon que la roue 1 en position affleure le plancher 15. De la sorte, lorsque le plancher 15 est recouvert par un tapis de sol approprié, non figuré, la roue 1 se trouve totalement masquée et le coffre présente alors un plancher uniformément plat.

Le logement 2, en forme de cuvette, est formé par exemple par emboutissage du panneau de plancher 15. Ce logement 2 comprend donc une paroi latérale cylindrique 3 et une paroi de fond 10.

On voit que le logement 2 est ainsi situé nettement au-dessous du seuil de chargement du coffre défini par le bord supérieur du seuil 17. On comprend donc que pour sortir la roue 1 de son logement, l'utilisateur soit obligé de fournir un effort pénible.

C'est pourquoi, selon l'invention, un dispositif permettant de soulever ladite roue est prévu dans le fond du logement 2.

En se reportant aux figures 1 et 2, on voit que ce dispositif est composé simplement d'un plateau 13 destiné à supporter la roue 1. Ce plateau 13 est soumis à l'action de moyens élastiques de rappel disposés entre le fond 10 du logement 2 et le plateau 13. Ces moyens élastiques sont, dans l'exemple figuré, formés par une lame ressort thermo-formée 5 s'étendant dans le plan longitudinal médian du véhicule.

Cette lame 5 comprend une première extrémité 6 présentant une forme arrondie sensiblement cylindrique 6 qui est solidarisée, par exemple par soudure, à la paroi de fond 10 du logement 2 dans la zone du logement se trouvant à l'opposé du seuil de coffre 17. L'autre extrémité est solidarisée au plateau 13. Cela n'est toutefois pas indispensable, le plateau 13 pouvant également être librement appuyé contre la lame 5.

Sous l'action de la lame 5, le plateau 13 se trouve ainsi monté pivotant par un bord s'étendant à l'opposé du seuil 17. Lorsque la roue est chargée sur le plateau 13 et n'est soumise à aucune action d'un utilisateur, la lame 5 est alors contrainte par le poids du plateau 13 et de la roue 1 en direction du fond 10 du logement 2, jusqu'à venir en appui contre une butée appropriée 7 ménagée à proximité de la zone d'articulation 6. Une seconde butée 8 munie d'un tampon amortisseur est, elle, disposée à l'oppose de l'articulation 6. Cette seconde butée est destinée à venir au contact du plateau 13. Cette position de la roue au fond de son logement a été représentée en trait plein sur les figures 1 et 2.

Lorsque la roue 1 ne repose pas sur le plateau 13 où lorsque l'utilisateur allège le poids de la roue en exerçant une traction sur cette dernière, la lame se redresse du fond 10 du logement 2 jusqu'à environ 30°. Le plateau 13 forme alors un plan incliné dont l'extrémité supérieure se trouve à la zone d'articulation 6 du plateau 13, c'est-à-dire celle jouxtant le seuil 17, et fasse alors sensiblement saillie hors du logement 2. Cette position relevée est schématisée en traits pointillés sur les figures 1 et 2. Dans cette position du plateau 13, la roue 1 se trouve alors venir affleurer le seuil 17.

Les moyens élastiques de rappel exerçant leur action sur le plateau à l'encontre du poids de la roue, sont tarés de façon que lorsque la roue se trouve sur le plateau 13, ce dernier vienne reposer contre la butée 8 et la lame contre la butée 7 ménagées dans le fond du logement 2 et ce, dans une position sensiblement d'équilibre.

Une poignée, souple ou rigide, favorisant la manipulation de ce dispositif peut être prévue à l'extrémité du plateau jouxtant le seuil 17. De même, le plateau 13 peut être monté coulissant le long de la lame 5 pour faciliter l'extraction de la roue hors du coffre.

Le fonctionnement du dispositif se déduit simplement de la description qui vient d'en être faite. Lorsque la roue de secours 1 est placée dans son logement sur le plateau 13, ce dernier s'enfonce vers le fond 10 du logement 2 en comprimant le ressort que forme la lame 5. Pour extraire la roue il suffit alors d'exercer une légère traction sur la roue ou sur le plateau 13 pour que ce dernier sous l'action de la lame 13 se redresse jusqu'à amener la roue au bord du seuil 17d'où l'utilisateur pourra alors l'extraire facilement.

Pour remettre la roue 1 à sa place dans le logement 2, il suffit, de la même façon de la faire glisser sur le plan incliné formé par le plateau 13. ce dernier va alors basculer lentement sous la seule action du poids de la roue, jusqu'à ce que la roue occupe pleinement le logement 2.

Bien entendu, l'exemple de réalisation du dispositif que l'on vient de décrire n'est pas limitatif de l'invention, notamment en ce qui concerne la forme des moyens élastiques exerçant leur action sur le plateau 13.

## Revendications

1. Dispositif de manipulation d'une roue de secours (1) destinée à être placée dans un logement (2) ménagé dans le plancher (15) d'un coffre (14) de véhicule automobile, **caractérisé en ce qu'**il comprend des moyens de support tel qu'un plateau (13), placés à l'intérieur dudit logement (2) et destinés à supporter ladite roue (1), lesdits moyens de support (13) coopérant avec des moyens élastiques de rappel pour basculer entre une position basse où la roue (1) est alors dans son logement (2) et une position haute en saillie au-dessus dudit plancher d'une hauteur prédéterminée à partir de laquelle la roue peut être facilement extraite hors du coffre (14).

2. Dispositif de manipulation d'une roue de secours (1) selon la revendication 1, **caractérisé en ce que** le coffre (14) comporte une ouverture d'accès (16) délimitée par un seuil de coffre (17) surélevé par rapport au plancher (15), et **en ce que** lorsque le plateau est en position haute, ladite roue (1) affleure sensiblement le seuil (17) du coffre.

3. Dispositif de manipulation d'une roue de secours (1) selon l'une quelconque des revendications 1 à 2, **caractérisé en ce que** le coffre (14) comporte une ouverture d'accès (16) délimitée par un seuil de coffre (17) surélevé par rapport au plancher (15), et **en ce que** ledit plateau (13) est monté à pivotement au voisinage d'un bord s'étendant à l'opposé dudit seuil (17).

4. Dispositif de manipulation d'une roue de secours (1) selon l'une quelconque des revendications 1 à 3, **caractérisé en ce que** lesdits moyens élastiques sont formés par une lame élastique (5).

5. Dispositif de manipulation d'une roue de secours (1) selon la revendication 4, **caractérisé en ce que** ladite lame (5) s'étend parallèlement au plan longitudinal médian du véhicule.

6. Dispositif de manipulation d'une roue de secours (1) selon l'une quelconque des revendications 4 à 5, **caractérisé en ce que** le coffre (14) comporte une ouverture d'accès (16) délimitée par un seuil de coffre (17) surélevé par rapport au plancher (15), et **en ce qu'**une première zone de ladite lame (5) est solidarisée avec le fond dudit logement (2) dans la zone dudit logement (2) opposée audit seuil (17) et **en ce qu'**une seconde zone de ladite lame (5) coopère avec ledit plateau (13).

7. Dispositif de manipulation d'une roue de secours (1) selon la revendication 6, **caractérisé en ce que** ladite première zone est formée par une partie recourbée sensiblement cylindrique (6) ménagée à une extrémité de ladite lame (5), cette partie recourbée définissant une articulation pour le déplacement de ladite lame (5) et dudit plateau (13).

8. Dispositif de manipulation d'une roue de secours (1) selon l'une quelconque des revendications 1 à 7, **caractérisé en ce que** ledit logement (2) comprend des moyens d'appui (7,8) dudit plateau (13) et de la lame (5) lorsque le plateau (13) se trouve en position basse.

9. Dispositif de manipulation d'une roue de secours (1) selon la revendication 8, **caractérisé en ce que** les dits moyens d'appui comportent des moyens amortisseurs (8).

10. Dispositif de manipulation d'une roue de secours (1) selon l'une quelconque des revendications précédentes, **caractérisé en ce que** lesdits moyens élastiques sont tarés de façon à ce que la position basse du plateau (13) supportant la roue (1) corresponde sensiblement à une position d'équilibre.
